# FASCICULE DE BREVET EUROPEEN

(11) **EP 1 186 813 B1**
(45) Date de publication et mention de la délivrance du brevet: **15.12.2004**
(21) Numéro de dépôt: 01870193.8
(22) Date de dépôt: 05.09.2001
(51) Int. Cl.: F16J 15/44

(54) **Joint carbone axial sans contact pour une enceinte de palier**
Berührungsfreie Axialkohlenstoffdichtung für ein Lagergehäuse
Contactless axial carbon seal for a bearing housing

(30) Priorité: 07.09.2000 EP 00870192; 15.09.2000 EP 00870206
(43) Date de publication de la demande: 13.03.2002
(73) Titulaire: Techspace Aero S.A., 4041 Herstal (BE)
(72) Inventeur: Tran, Quac Hung, 4020 Liege (BE); Rouelle, Sébastien, 4560 Bois-et-Borsu (BE)
(74) Mandataire: Van Malderen, Joelle

(56) Documents cités:
- EP-A- 0 818 607
- EP-A- 0 967 424
- EP-A- 1 055 848
- US-A- 4 398 730
- US-A- 5 301 957

## Description

### Objet de l'invention

La présente invention se rapporte à un nouveau dispositif de joint d'étanchéité pour une enceinte de palier de turbomachine. Cette enceinte de palier fonctionne aussi bien aux très hautes qu'aux très basses températures et peut être soumise à la pression inverse.

### Arrière-plan technologique et état de la technique

De manière classique, un palier de turbomachine supportant un arbre tournant à l'intérieur d'un carter fixe comporte un roulement disposé dans une enceinte où sa lubrification est assurée. Cependant, toute migration d'huile doit être évitée vers certains compartiments de la turbomachine. L'étanchéité doit ainsi être assurée à la séparation entre l'enceinte de palier contenant de l'huile et une enceinte voisine à l'air qui doit être maintenue exempte d'huile. On parle de pression inverse lorsque, contrairement au cas habituel, la pression de l'enceinte à huile est supérieure à la pression de l'enceinte à air.

Diverses solutions ont été mises en oeuvre dans ce but. Des joints à labyrinthe ont ainsi été utilisés et présentent l'intérêt de leur simplicité de fabrication et d'une longue durée de vie. Toutefois, ils peuvent occasionner des fuites d'air importantes préjudiciables aux performances et les balourds de l'arbre peuvent entraîner des détériorations.

Il en résulte une augmentation des consommations d'huile entraînée par l'air vers les déshuileurs air-huile et des fuites d'huile restent possibles de l'enceinte à huile vers l'enceinte à air.

D'autres solutions utilisent des joints en carbone associés à diverses modalités de mise en place. Notamment, le document EP-A-0 967 424 illustre un exemple de réalisation de joint carbone axial sans contact et avec portance déjà proposé par la Demanderesse. Une face radiale de l'anneau de carbone en une seule pièce coopère avec une face radiale de l'anneau tournant, qui présente une rangée de rainures de portance de manière à assurer une étanchéité en fonctionnement sans frottement entre lesdites faces radiales. Le dispositif est complété d'un joint à labyrinthe pour éviter l'entrée de poussières au niveau du joint principal. Ce joint ne peut pas fonctionner dans des conditions extrêmes telles que pression inverse et très haute température.

Le brevet US-A-5 301 957 propose un joint radial présentant un ou deux anneaux de carbone en contact avec un cylindre tournant refroidi par jet d'huile. La surface externe ou interne du carbone présente des rainures où se produit la rétention de particules d'huile (pas de principe auto-nettoyant). Par contre, il n'y a pas de rainures de portance sur la partie tournante.

Le brevet US-A-4 398 730 divulgue un joint axial avec contact dont l'anneau statique est maintenu par soufflet. Le refroidissement de l'anneau tournant est assuré par des canaux d'huile alésés dans cet anneau. Ce joint ne peut pas fonctionner dans les conditions extrêmes de pression inverse et de très haute température.

Une autre invention de la Demanderesse, correspondant à la demande EP-A-1 055 848, présente un joint radial sans contact avec portance comportant un anneau statique de segments de carbone bloqué axialement. La face dynamique du joint est cylindrique et la face statique est plane. La face cylindrique de la surface tournante comporte des rainures de portance pouvant néanmoins conduire à la rétention de particules d'huile, malgré la présence d'un système de refoulement d'huile à labyrinthe.

La demande EP-A-0 818 607 propose un joint radial de segments de carbone avec contact et refroidissement du cylindre tournant. Une double barrière de protection du joint par rapport au fluide contaminant est constituée d'un baffle annulaire et d'un joint à lèvre. La face dynamique du joint est cylindrique et la face statique est plane. Les rainures de portance dans l'anneau de carbone conduisent à la rétention de particules d'huile.

Le document EP-A-0 387 122 illustre encore un exemple de réalisation de joint radial segmenté avec contact. Enfin, un autre exemple est montré par EP-A-0 562 895.

On note que l'utilisation de joints axiaux ou radiaux avec contacts réduit largement les fuites d'air vers les enceintes à huile et, par conséquent, la consommation d'huile après le passage à travers un déshuileur. Cependant les répercussions des balourds de l'arbre ne sont pas maîtrisées et des usures résultent de frottements importants, ce qui limite la durée de vie de ces joints. Celle-ci, généralement plus courte que celles des labyrinthes, est fréquemment de l'ordre de quelques milliers d'heures et donc insuffisante pour les applications visées par la présente invention. En plus, ces joints présentent des fuites d'huile pour les pressions inverses.

### Buts de l'invention

La présente invention vise à fournir un nouveau joint d'étanchéité dans les enceintes de palier de turbomachine permettant de contrôler la fuite d'air de l'enceinte à air vers l'enceinte à huile, en vue de contrôler ainsi la consommation d'huile par le déshuileur air-huile.

Un but complémentaire de la présente invention est d'éviter la fuite d'huile de l'enceinte à huile vers l'enceinte à air, afin de ne pas polluer l'air de la cabine ou de l'habitacle alimenté(e) par des prélèvements dans les compresseurs.

Un but complémentaire de la présente invention est de contrôler l'usure et l'échauffement des joints par frottement afin de réaliser la durée de vie normale du moteur et d'éviter la cokéfaction de l'huile.

### Principaux éléments caractéristiques de l'invention

La présente invention se rapporte à un dispositif de joint d'étanchéité de palier de turbomachine, ladite turbomachine comportant une enceinte à huile et une enceinte à air. Le palier comporte un roulement monté entre un manchon solidaire d'un arbre mobile, un support de palier, un support de joint. Le dispositif, séparant l'enceinte à huile du roulement de l'enceinte à air de la turbomachine, comprend un anneau tournant monté sur la partie de manchon située du côté de l'enceinte à huile et un anneau de carbone ne présentant pas de contact avec l'arbre, ni avec le support de joint.

L'anneau de carbone s'appuie axialement contre un support annulaire au moyen de ressorts, la face radiale dudit anneau de carbone coopérant avec l'anneau tournant précité au niveau de la face radiale dudit anneau tournant, par l'intermédiaire de rainures de portance usinées sur ledit anneau tournant.

Ce dispositif permet d'assurer une étanchéité dynamique de la turbomachine en fonctionnement, sans frottement entre les faces radiales de l'anneau de carbone et de l'anneau tournant respectivement.
L'invention se caractérise par le fait que l'anneau de carbone est un anneau segmenté.
Dans la suite de l'exposé de l'invention, l'expression "anneau de segments de carbone" désignera aussi bien un anneau comportant plusieurs segments de carbone qu'un anneau fendu, à un seul segment.
De plus, selon l'invention, l'anneau de segments de carbone est pourvu de moyens pour assurer une étanchéité semi-statique, usinés directement sur l'anneau de segments de carbone, cette étanchéité semi-statique étant assurée en outre par la compression du (des) segment(s) de carbone sur le support de joint à l'aide d'un ressort d'expansion circulaire.

L'enceinte de palier équipée d'un dispositif de joint d'étanchéité selon l'invention fonctionne aussi bien aux très hautes qu'aux très basses températures et est soumise, le cas échéant, à la pression inverse.

Avantageusement, l'anneau de segments de carbone est maintenu sans contact avec l'anneau tournant, en fonctionnement, dans le support de joint, grâce aux rainures de portance.

De préférence, l'anneau tournant est maintenu dans la direction axiale par un ressort annulaire, centré sur le manchon à l'aide d'un joint élastique et entraîné en rotation par des goupilles.

Selon une autre caractéristique de l'invention, un dispositif de pompage d'air par vis et abradable, disposé entre le support de joint et le manchon, assure la compression de l'air afin de réaliser une surpression de l'air à l'entrée de l'anneau de segments de carbone.

De préférence, les rainures de portance sont disposées sur la surface de l'anneau tournant, de manière telle qu'elles assurent une étanchéité dynamique et une élévation de pression air suffisante pour annihiler la pression inverse.

De manière particulièrement avantageuse, le joint est positionné axialement par une cale de réglage et est muni d'un dispositif de blocage anti-rotation, le dispositif de blocage assurant également le blocage axial de l'anneau de segments de carbone à l'état libre.

### Brève description des figures

La figure 1 représente, selon une vue en coupe par un plan passant par l'axe de rotation de l'arbre, une partie de palier de turbomachine comportant un dispositif de joint d'étanchéité d'enceinte conforme à la présente invention.

La figure 2 une vue de détail agrandi de l'anneau de segments de carbone.

La figure 3 représente une vue de détail de l'anneau tournant, montrant un exemple de rainures de portance d'étanchéité du joint.

### Description détaillée de l'invention

Les joints carbone axiaux sans contact pour les pressions inverses et pour les très hautes ou très basses températures, selon l'invention, sont des améliorations techniques des joints carbone axiaux avec ou sans contacts classiques.

Ils apportent les avantages suivants :
- très faible fuite d'air de l'enceinte d'air vers l'enceinte d'huile ;
- très faible consommation d'huile à travers les déshuileurs;
- pas de fuite d'huile de l'enceinte d'huile vers l'enceinte d'air, même pour la pression inverse ;
- utilisation à très haute et très basse température ;
- pas de frottement et d'usure, donc très longue durée de vie ;
- insensibilité aux balourds nominaux de l'arbre.

La conception des joints carbone axiaux sans contact dans ces conditions demande des attentions particulières sur l'équilibre de pression autour de l'anneau de carbone, sans joints secondaires et sans déformation de l'anneau tournant.

Le jeu de fuite est suffisamment grand pour assurer le non-contact du joint et suffisamment petit pour assurer la fuite d'air objective et pas de fuite d'huile.

La forme et le sens des rainures sur l'anneau tournant doivent créer un film d'air qui sépare l'anneau de carbone de l'anneau tournant.

Un système de pressurisation supplémentaire devant l'entrée d'air du joint permet de contrebalancer la pression inverse.

D'autres caractéristiques et avantages de l'invention seront mieux compris à la lecture de la description qui va suivre d'un mode de réalisation de l'invention, en référence aux dessins annexés.

### Description d'une forme d'exécution préférée de l'invention

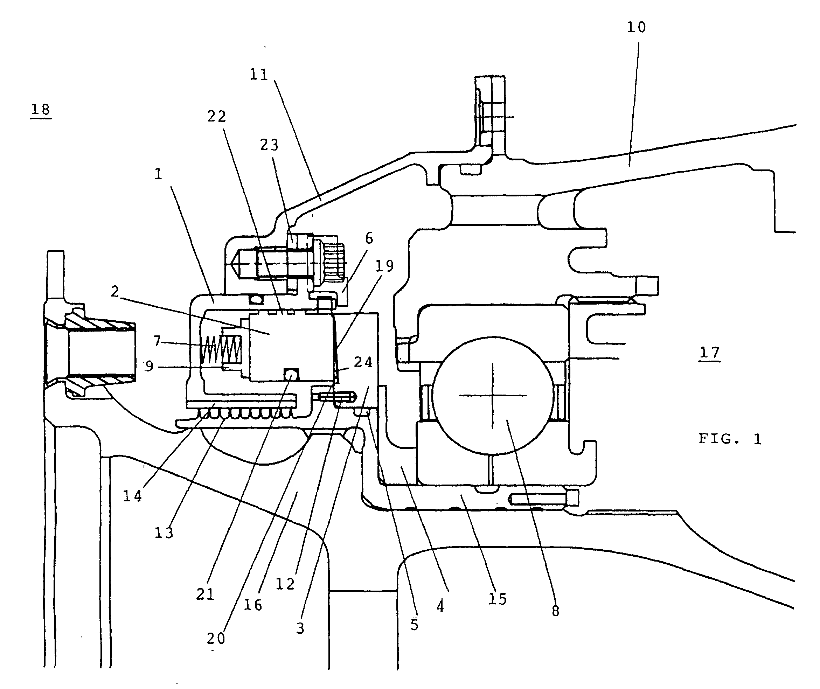

Suivant la représentation donnée par la figure 1, un arbre 16 est supporté en rotation par un palier porté par un carter ou support de palier 10 et comportant un roulement 8. Le roulement 8 est compris dans une enceinte dite à huile 17, où sont présents à la fois de l'air et de l'huile du fait de la lubrification dudit roulement assurée de manière connue en soi et qui n'a pas été représentée sur la figure 1. Au-delà du palier de support, l'arbre 16 est entouré d'une enceinte dite à air 18. Celle-ci doit rester exempte d'huile au niveau des prélèvements d'air effectués de manière connue en soi, exigeant l'utilisation d'un air propre, afin de pas aggraver les problèmes de pressurisation et de filtration.

La forme d'exécution préférée de l'invention proposée ci-après évite les divers inconvénients de l'état de la technique, tout en assurant l'étanchéité recherchée entre l'enceinte à air 18 et l'enceinte à huile 17, même pour les cas de pression inverse et de très haute ou très basse température.

Le dispositif de joint d'étanchéité répondant à ces conditions est caractérisé en ce qu'il comprend :
- une enveloppe 1 de la partie statique du joint ;
- un anneau de segments de carbone 2 ;
- un anneau tournant 3 en carbure ou revêtu de carbure générant un effet de portance sur la surface de contact 19, via des rainures 24, disposées de préférence selon une pluralité de rangées et dont la profondeur est variable, coopérant avec la surface 20 de l'anneau de segments de carbone 2.

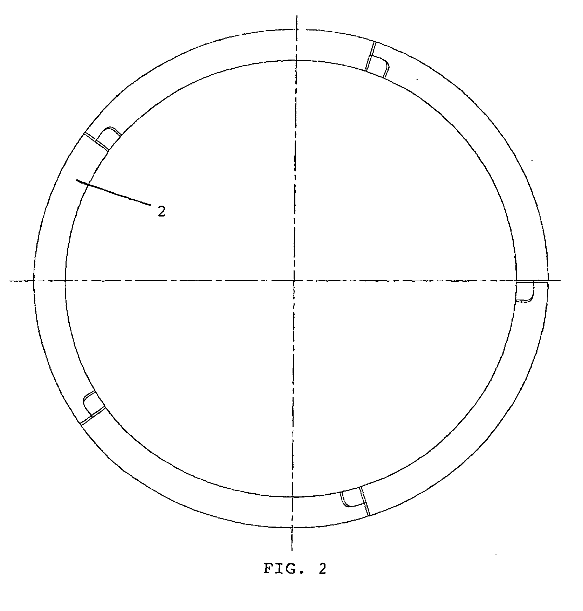

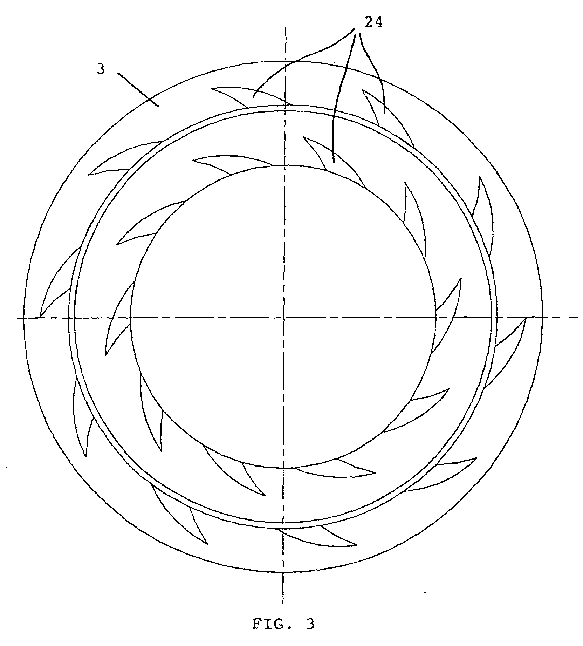

Les détails de réalisation de l'anneau de segments de carbone 2 et de l'anneau tournant 3 sont représentés respectivement sur les figures 2 et 3.

L'anneau tournant 3 est centré, mais non fixé, sur un manchon 15, qui est lui-même fixé sur l'arbre 16, à l'aide d'un joint élastique 5 permettant le rattrapage du jeu et résistant à des températures de fonctionnement. L'ensemble se trouve devant le roulement 8, lui-même monté sur le support 10.

L'anneau tournant 3 est entraîné par des goupilles de blocage anti-rotation 12 et maintenu seulement en déplacement axial par un ressort 4, par exemple un ressort en anneau.

Un système de blocage axial et anti-rotation 6 permet à l'anneau de carbone 2 de rester dans son support 1, à l'état libre et en fonctionnement.

Une charge axiale pour maintenir le contact entre l'anneau de segments de carbone 2 et l'anneau tournant 3, à l'état libre, est réalisée par des ressorts axiaux 7, maintenus par un anneau de maintien 9.

Une étanchéité semi-statique secondaire 22, usinée directement dans l'anneau de segments de carbone 2, possède des températures limites de fonctionnement voisines de celles de l'anneau de segments de carbone 2. Cette étanchéité statique est assurée par un ressort d'expansion circulaire 21 qui réalise le contact entre l'anneau de segments de carbone 2 et le support du joint 1.

Un système de pompage d'air par vis 13 et abradable 14 permet de ramener la pression d'air de l'enceinte d'air 18, au niveau de l'entrée du joint carbone, à une valeur supérieure à celle de l'enceinte d'huile 17, afin de garantir l'absence de fuite d'huile dans toutes les configurations de vol.

La chambre à air 18 assure donc la pressurisation côté air de l'anneau de segments de carbone 2 et la chambre à huile 17 assure la pression côté huile de l'enceinte de paliers.

Un support 11 associe la fixation de l'enveloppe 1 avec le réglage de position axiale par une cale 23 et sépare la chambre à air 18 de la chambre à huile 17.

Une modalité de réalisation particulièrement avantageuse de l'invention résulte de la combinaison d'un anneau de carbone 2 réalisé sous forme d'une pluralité de segments ou d'un anneau fendu (contrairement à EP-A-0 967 424, US-A-5 301 957, US-A-4 398 730), d'un anneau tournant 3 comportant au moins une rangée de rainures de portance, un dispositif de pompage d'air 13,14 (contrairement à EP-A-0 967 424, US-A-4 398 730) et un ressort d'expansion (radiale) circulaire 21 de l'anneau de carbone (contrairement à EP-A-0 967 424, US-A-5 301 957, US-A-4 398 730, EP-A-1 055 848, EP-A-0 818 607) pour la réalisation d'une étanchéité semi-statique 22.

Il convient de noter que généralement les ressorts associés aux segments de carbone dans l'état de la technique sont des ressorts circonférentiels de maintien desdits segments et non des ressorts d'expansion.

Ces dispositions, remarquables selon l'invention, permettent d'atteindre les buts recherchés. Notamment, la fuite d'air de l'enceinte à air vers l'enceinte à huile est très réduite, ce qui permet de contrôler la consommation d'huile et d'éviter une influence néfaste sur les performances. La fuite d'huile de l'enceinte à huile vers l'enceinte à air, dans la condition de pression inverse, est également évitée, ce qui permet de ne pas polluer l'air utilisé dans les prélèvements de l'avion. En supprimant le frottement, les échauffements du joint sont évités, de même que les détériorations et/ou l'usure qui en résultent. Les durées de vie de joints sont donc significativement allongées. En outre, le dispositif fonctionne respectivement aux très hautes et très basses températures présentes dans les turbomachines.

## Revendications

1. Dispositif de joint d'étanchéité de palier de turbomachine, ladite turbomachine comportant une enceinte à huile (17) et une enceinte à air (18), ledit palier comportant un roulement (8) monté entre un manchon (15) solidaire d'un arbre mobile (16), un support de palier (10), un support de joint (11), ledit dispositif séparant l'enceinte à huile (17) du roulement (8) de l'enceinte à air (18) de la turbomachine et comprenant un anneau tournant (3) monté sur la partie de manchon (15) située du côté de l'enceinte à huile (17) ainsi qu'un anneau de carbone (2) ne présentant pas de contact avec l'arbre (16), ni avec le support de joint (11), ledit anneau de carbone (2) s'appuyant axialement contre un support annulaire (9) au moyen de ressorts (7), la face radiale (20) dudit anneau de carbone (2) coopérant avec l'anneau tournant (3) par la face radiale (19) dudit anneau tournant (3), par l'intermédiaire de rainures de portance (24) usinées sur ledit anneau tournant (3), de préférence en une pluralité de rangées, de manière à assurer une étanchéité dynamique en fonctionnement sans frottement entre les faces radiales (19,20), **caractérisé en ce que** l'anneau de carbone (2) est un anneau segmenté et comporte des moyens pour assurer une étanchéité semi-statique (22), usinés directement sur l'anneau de segments de carbone (2), cette étanchéité semi-statique (22) étant assurée en outre par la compression du (des) segment(s) de carbone sur le support (1) à l'aide d'un ressort d'expansion circulaire (21).

2. Dispositif de joint d'étanchéité de palier selon la revendication 1, **caractérisé en ce que** l'anneau de segments de carbone (2) est maintenu sans contact avec l'anneau tournant (3), en fonctionnement, dans le support (1), grâce aux rainures de portance (24).

3. Dispositif de joint d'étanchéité de palier selon l'une quelconque des revendications précédentes, **caractérisé en ce que** l'anneau tournant (3) est maintenu dans la direction axiale par un ressort annulaire (4), centré sur le manchon (15) à l'aide d'un joint élastique (5) et entraîné en rotation par des goupilles (12).

4. Dispositif de joint d'étanchéité de palier selon l'une quelconque des revendications précédentes, **caractérisé en ce qu'**un dispositif de pompage d'air par vis (13) et abradable (14), disposé entre le support (1) et le manchon (15), assure la compression de l'air afin de réaliser une surpression de l'air à l'entrée de l'anneau de segments de carbone (2).

5. Dispositif de joint d'étanchéité de palier selon l'une quelconque des revendications précédentes, **caractérisé en ce que** lesdites rainures de portance (24) sont disposées sur la surface (19) de l'anneau tournant (3) de manière telle qu'elles assurent une étanchéité dynamique et une élévation de pression d'air suffisante pour annihiler la pression inverse.

6. Dispositif de joint d'étanchéité de palier selon l'une quelconque des revendications précédentes, **caractérisé en ce que** le joint est positionné axialement par une cale de réglage (23) et est muni d'un dispositif de blocage anti-rotation (6), ledit dispositif de blocage (6) assurant également le blocage axial de l'anneau de segments de carbone (2) à l'état libre.

7. Utilisation d'un dispositif de joint d'étanchéité, selon l'une quelconque des revendications précédentes, pour assurer l'étanchéité d'un palier de turbomachine, fonctionnant aux très hautes et aux très basses températures et soumise à la pression inverse.

## Claims

1. Sealing device for a turbomachine bearing, said turbomachine comprising an oil chamber (17) and an air chamber (18), said bearing comprising a rolling bearing (8) mounted between a sleeve (15) securely fixed to a mobile shaft (16), a bearing support (10) and a seal support (11), said device separating the oil chamber (17) of the rolling bearing (8) from the air chamber (18) of the turbomachine and comprising a rotary ring (3) mounted on the portion of the sleeve (15) located on the oil chamber side (17) as well as a carbon ring (2) which is not in contact with the shaft (16) or with the seal support (11), said carbon ring (2) axially bearing against an annular support (9) by means of springs (7), the radial face (20) of said carbon ring (2) engaging with the rotary ring (3) via the radial face of said rotary ring (3), by means of lift slots (24) machined onto said rotary ring (3) preferably according to a plurality of rows, so as to ensure dynamic sealing in operation, with no friction between the radial faces (19, 20), **characterised in that** the carbon ring (2) is a segmented ring and comprises means to ensure a semi-static sealing (22), directly machined onto the segmented carbon ring (2), this semi-static sealing (22) being moreover ensured by compressing the carbon segment(s) on the support (1) with the aid of an circular expansion spring (21).

2. Bearing sealing device according to Claim 1, **characterised in that** the segmented carbon ring (2) is maintained without contact with the rotary ring (3), in operation, in the support (1), by means of the lift slots (24).

3. Bearing sealing device according to any one of the preceding claims, **characterised in that** the rotary ring (3) is maintained in the axial direction by means of an annular spring (4), centred on the sleeve (15) with the aid of an elastic seal (5) and driven in rotation by pins (12).

4. Bearing sealing device according to any one of the preceding claims, **characterised in that** a device for pumping air by means of screws (13) and abradable seal (14), arranged between the support (1) and the sleeve (15), ensures air compression in order to achieve a positive air pressure at the inlet of the segmented carbon ring (2).

5. Bearing sealing device according to any one of the preceding claims, **characterised in that** said lift slots (24) are arranged on the surface (19) of the rotary ring (3), such that they ensure dynamic sealing and a rise in air pressure sufficient to cancel out the inverse pressure.

6. Bearing sealing device according to any one of the preceding claims, **characterised in that** the seal is axially positioned by means of an adjusting wedge (23) and is provided with an anti-rotation blocking device (6), said blocking device (6) also ensuring axial blocking of the segmented carbon ring (2) in the free state.

7. Use of a sealing device according to any one of the preceding claims in order to ensure the sealing of a turbomachine bearing, working at very high and very low temperatures and subjected to inverse pressure.

## Patentansprüche

1. Lagerdichtung eines Turbotriebwerks, wobei das besagte Turbotriebwerk einen Ölraum (17) und einen Luftraum (18) umfasst; das besagte Lager umfasst ein Wälzlager (8), das zwischen eine Muffe (15), die mit einer beweglichen Welle (16) verbunden ist, eine Lageraufnahme (10), eine Dichtungsaufnahme (11) eingebaut ist, wobei die besagte Dichtung den Ölraum (17) des Wälzlagers (8) vom Luftraum (18) des Turbotriebwerks trennt und einen Drehring (3) umfasst, der auf den auf der Ölraumseite (17) befindlichen Teil der Muffe (15) montiert ist, sowie einen Kohlering (2), der weder die Welle (16) noch die Dichtungsaufnahme (11) berührt; der besagte Kohlering wird durch Federn (7) in axialer Richtung gegen einen ringförmigen Träger (9) gedrückt, wobei die Radialseite (20) des besagten Kohlerings (2) mit dem Drehring (3) über dessen Radialseite (19) zusammenwirkt, und zwar über Tragnuten (24), die in dem besagten Drehring (3) vorzugsweise in mehreren Reihen hergestellt wurden, so dass während des Betriebs eine dynamische Abdichtung ohne Reibung zwischen den Radialflächen (19, 20) gewährleistet wird, **dadurch gekennzeichnet, dass** der Kohlering (2) ein aus Segmenten bestehender Ring ist und Mittel umfasst, um eine halbstatische Abdichtung zu gewährleisten (22), die direkt in dem Ring aus Kohlesegmenten (2) hergestellt sind; zudem wird diese halbstatische Abdichtung (22) durch das Pressen des/der Kohlesegments(te) auf den Träger (1) mittels einer kreisförmigen Dehnfeder (21) gewährleistet.

2. Lagerdichtung nach Anspruch 1, **dadurch gekennzeichnet, dass** der Kohlesegmentring (2) im Betrieb durch die Tragnuten (24) so im Träger (1) gehalten wird, dass er den Drehring (3) nicht berührt.

3. Lagerdichtung nach einem der vorstehenden Ansprüche, **dadurch gekennzeichnet, dass** der Drehring (3) in axialer Richtung durch eine Ringfeder (4) gehalten wird, mittels einer elastischen Dichtung (5) mittig auf der Muffe (15) angebracht ist und mit Stiften (12) in Drehung versetzt wird.

4. Lagerdichtung nach einem der vorstehenden Ansprüche, **dadurch gekennzeichnet, dass** eine Abrieb(14)-Vorrichtung zum Pumpen von Luft mit einer Schraube (13), die zwischen dem Träger (1) und der Muffe (15) angebracht ist, die Verdichtung der Luft durchführt, um einen Luftüberdruck am Eingang des Kohlesegmentrings (2) zu erhalten.

5. Lagerdichtung nach einem der vorstehenden Ansprüche, **dadurch gekennzeichnet, dass** die besagten Tragnuten (24) so auf der Oberfläche (19) des Drehrings (3) angebracht sind, dass sie für eine dynamische Abdichtung und einen ausreichenden Anstieg des Luftdrucks sorgen, um den Gegendruck aufzuheben.

6. Lagerdichtung nach einem der vorstehenden Ansprüche, **dadurch gekennzeichnet, dass** die Dichtung axial durch einen Stellkeil (23) positioniert ist und über eine Drehsicherung (6) verfügt, die auch für die Feststellung des Kohlesegmentrings (2) in axialer Richtung im freien Zustand sorgt.

7. Nutzung einer Dichtung nach einem der vorstehenden Ansprüche zur Abdichtung des Lagers eines Turbotriebwerks, das bei sehr hohen und sehr tiefen Temperaturen betrieben wird und Gegendruck ausgesetzt ist.
